# EUROPEAN PATENT SPECIFICATION

(11) **EP 4 476 166 B1**
(45) Date of publication and mention of the grant of the patent: **08.04.2026**
(21) Application number: 23705094.3
(22) Date of filing: 10.02.2023
(51) Int. Cl.: C01B 3/04

(54) **HYBRID AMMONIA DECOMPOSITION SYSTEM**
HYBRIDES AMMONIAKZERSETZUNGSSYSTEM
SYSTÈME DE DÉCOMPOSITION D'AMMONIAC HYBRIDE

(30) Priority: 11.02.2022 NL 2030905
(43) Date of publication of application: 18.12.2024
(73) Proprietor: Proton Ventures B.V., 3115 JD Schiedam (NL)
(72) Inventor: LIANG, Cheng, 3115 JD Schiedam (NL); ROUWENHORST, Kevin Hendrik Reindert, 3115 JD Schiedam (NL); DE CILLIS, Stefano, 3115 JD Schiedam (NL); FAGIOLI, Giorgio, 3115 JD Schiedam (NL)
(74) Representative: EDP Patent Attorneys B.V.
(86) International application number: PCT/NL2023/050060
(87) International publication number: WO 2023/153928

(56) References cited:
- CN-A- 113 896 168
- US-A1- 2005 037 244
- US-A1- 2020 398 240
- US-B2- 10 005 067

## Description

### FIELD OF THE INVENTION

The invention relates to a system to provide dihydrogen from ammonia. Further, the present invention relates to a method to provide dihydrogen from ammonia.

### BACKGROUND OF THE INVENTION

Cracking of ammonia in an autothermal reactor is known in the art. US2020123006A1 describes a process for the production of a product gas containing nitrogen and dihydrogen from ammonia comprising the steps of non-catalytic partial oxidation of ammonia with an oxygen containing gas to a process gas containing nitrogen, water, amounts of nitrogen oxides and ammonia; cracking of at least a part of the remaining amounts of ammonia to dihydrogen and nitrogen in the process gas by contact with a nickel containing catalyst and simultaneously reducing the amounts of nitrogen oxides to nitrogen and water by reaction with a part of the dihydrogen formed during cracking of the process gas by contact of the process gas with the nickel containing catalyst; and withdrawing the dihydrogen and nitrogen containing product gas.

US2005037244A1 describes an autothermal process for the decomposition of ammonia, which process comprises feeding a mixture of ammonia and an oxygen-containing gas into a reaction zone where it is contacted with a catalyst consisting essentially of nickel on a support or unsupported nickel at effective conditions to cause the ammonia to decompose into nitrogen and hydrogen by an endothermic reaction, wherein a portion of the hydrogen thus produced is combusted in said reaction zone by an exothermic reaction that produces an effective amount of heat to maintain the ammonia decomposition reaction.

CN113896168A describes a method for preparing hydrogen or reducing gas by ammonia cracking through a two-stage process, which comprises the following steps that firstly, raw material liquid ammonia is completely gasified and heated through a heat exchange gasification system, then enters a first-stage heat exchange ammonia cracking reaction system, and a partial ammonia cracking reaction is conducted, the reaction gas discharged from the first-stage heat exchange ammonia cracking reaction system enters the second-stage high-temperature ammonia cracking reaction system to carry out a residual ammonia cracking reaction, and the second-stage high-temperature ammonia cracking reaction gas sequentially enters the first-stage heat exchange ammonia cracking reaction system and the heat exchange gasification system to obtain the reducing gas after heat is recovered step by step. It further describes that when the reducing gas needs to be subsequently prepared into hydrogen, the reaction gas is cooled after heat recovery, and then enters a PSA hydrogen extraction system to prepare the product hydrogen.

US 10005067B2 describes an apparatus for producing a gas mixture comprising hydrogen and nitrogen gas, said apparatus comprising an ammonia decomposition unit comprising a catalyst for decomposing ammonia; an ammonia oxidizing unit comprising a selective catalyst for oxidizing ammonia, wherein said catalyst for oxidizing ammonia is a catalyst comprising at least one transition metal element configured to selectively remove ammonia from gas mixtures comprising hydrogen and ammonia gas, wherein the gas mixtures comprise ammonia at a concentration lower than 1000 ppm, wherein said at least one transition metal element is supported on a support; wherein said at least one transition metal element is Cr, Mo, W, or V or a combination thereof further comprising a feed to said ammonia oxidizing unit configured to introduce oxygen gas or an oxidant.

### SUMMARY OF THE INVENTION

Providing fuel while maintaining carbon-free emissions may be challenging. Dihydrogen (H₂) may be a suitable alternative to conventional fuels as dihydrogen may have a much higher energy density compared to fossil fuels. Further, dihydrogen and dioxygen can be combusted to produce water with the evolution of heat. Hence, dihydrogen may be a sustainable and emission-free fuel for power generation. With the development of efficient fuel cells, it may be possible to use dihydrogen as a fuel in vehicles. Moreover, dihydrogen may also be used to power tools, machines, or equipment in industry. In addition to being a supply of energy, dihydrogen may also be used for the production of fertilizers, plastics and pharmaceutical chemicals, flushing gas during the manufacture of silicon chips, etc.

However, costs of dihydrogen distribution may be high because of high-pressure (300-700 bar) storage requirements and/or the requirement for a high pressure distribution network. A part of this problem may be mitigated by using a carrier fluid for dihydrogen. Ammonia may be a suitable carrier of dihydrogen given its relatively high energy density by volume and the possibility to convert ammonia into dihydrogen. Further, ammonia can be relatively easily transported (approximately 18 million tonnes may currently be shipped every year), its chemical composition does not contain carbon, and there already is an existing production and distribution network for ammonia.

Conventionally, dihydrogen may be recovered by decomposing ammonia over a suitable catalyst under high temperature and pressure. This is known as cracking of ammonia, where ammonia is decomposed towards dihydrogen and dinitrogen over a catalyst such as Ni, Ru, Co, Fe, or an alloy thereof according to the equation 2NH₃ ⇔ N₂ + 3H₂. This is an endothermic process, requiring about 46kJ/mol of ammonia at 298K and standard pressure. Afterwards dihydrogen may be purified from the cracking reactor effluent. This process typically has a relatively low dihydrogen recovery rate of 70-75%. Further, the process may require substantial heating, often provided by the burning of a fuel, such as an ammonia-based fuel, to operate a furnace. The combustion of ammonia in such a furnace may require a high air-fuel ratio and may thus involve the burning of substantial amounts of fuel to sustain the reaction temperature, which decreases the efficiency of such a system. Moreover, the process may typically result in substantial heat losses, such as due to the ejection of hot flue gases from the furnace.

Further, cracking of ammonia may usually be carried out by means of allothermal reforming, autothermal reforming or by electrically heated ammonia disassociation reactors. Conventionally, in an autothermal reactor, the reaction may be carried out at low pressures and with a combustion process (such as provided by an ammonia burner). As a result, such reactor may require mechanical flow distributors or higher temperatures to drive the conversion of ammonia to dihydrogen
The prior art may further describe the use of allothermal reactors for the cracking of ammonia. Allothermal reactors may re-use heat from waste streams of dihydrogen purification, but require additional heating, which may typically be provided by burning ammonia in a furnace. Typically, a high flow rate of air through the furnace may be required such that the temperature of the furnace does not exceed temperature limits. Hence, prior art systems may provide a relatively low hydrogen recovery rate, or may involve substantial consumption of fuel, which often involves the burning of ammonia, which reduces the ammonia available for conversion into dihydrogen.

Further, the prior art allothermal processes may result in substantial generation of impurities, such as NOₓ compounds, due to the introduction of ammonia in the furnace. The NOₓ compounds may need to be converted to dinitrogen and water in energy-intensive and/or expensive processes.

In addition, prior art processes may require compressors to pressurize the produced dihydrogen to a sufficiently high pressure to meet the requirements of a distribution network, end-users, or other downstream processes. However, because of the potential risk of hydrogen self-burning, compression ratios may be limited to a discharge temperature of maximally about 135-150°C, implying the need of many stages and intercooling, which may result in a more complex, more energy demanding and overall less efficient process. In particular, grids or downstream production plants in large scale dihydrogen production plants supplying high pressure dihydrogen may require large multiple compressor trains due to limited capacities of displacement compressors.

Hence, it is an aspect of the invention to provide an alternative system to decompose ammonia to produce dihydrogen, which preferably further at least partly obviates one or more of above-described drawbacks. The present invention may have as object to overcome or ameliorate at least one of the disadvantages of the prior art, or to provide a useful alternative.

Hence, in a first aspect the invention may provide a system to provide dihydrogen from ammonia. The system may comprise one or more of an ammonia supply, a heating system, an allothermal reactor part, an autothermal reactor part, and a dioxygen supply. The ammonia supply may be configured to provide an ammonia stream to the allothermal reactor part, especially to a reactor tube arranged inside of the allothermal reactor part. In particular, the allothermal reactor part may comprise a housing and a reactor tube arranged inside of (or internal to) the housing. The allothermal reactor part, especially the reactor tube, may comprise a first catalytic bed, especially wherein the first catalytic bed comprises a first ammonia dissociation catalyst. Further, the allothermal reactor part, especially the reactor tube, may be configured to provide a first product stream to the autothermal reactor part. The heating system may be arranged inside of the housing (of the allothermal reactor part) and external to the reactor tube. Further, the heating system may be configured to heat the reactor tube to a temperature selected from the range of 600-1000°C. The dioxygen supply may be configured to provide a dioxygen stream to the autothermal reactor part heating system. The autothermal reactor part may comprise a second catalytic bed, wherein the second catalytic bed may comprise a second ammonia dissociation catalyst. In particular, the second catalytic bed, especially the second ammonia dissociation catalyst, may further comprise an oxidation catalyst, such as a hydrogen oxidation catalyst, or such as an ammonia oxidation catalyst.

In particular, the system of the invention may provide a partial conversion of ammonia to dihydrogen in the allothermal reactor part, which may be heated directly or indirectly using waste calorific streams from hydrogen purification, and (part of) the remaining ammonia may subsequently be converted to dihydrogen in the autothermal reactor part, which may be heated using the controlled introduction of dioxygen (O₂) for the exothermic conversion of NH₃/H₂ and O₂ into water (and N₂ in case of NH₃). Thereby, the system of the invention may facilitate providing a relatively high hydrogen recovery rate, such as 80% or above, with limited use of dihydrogen and ammonia for heat generation. In particular, only trace amounts of ammonia - as part of the calorific stream - may be used for the heating of the allothermal reactor part, substantially reducing the generation of impurities, such as NOₓ compounds, compared to prior art allothermal systems, thereby reducing the burden for separation and conversion of impurities, and thus improving the efficiency of the system.

Further, the system of the invention may be relatively compact, such as due to simplified separation processes, which may save both resources and space.

The term "hydrogen recovery rate" may herein especially refer to the fraction of hydrogen in the feedstock ammonia ending up as the final hydrogen product. For instance, if 12H₂ would be recovered from 10NH₃, the hydrogen recovery rate would be 80%.

The system may provide the advantage of utilizing the energy from the waste streams (especially from dihydrogen purification - see below) in the allothermal reactor part, and complementing the conversion therein with a conversion in the autothermal reactor part involving the controlled introducing of O₂, resulting in a (relatively) high energy efficiency. In particular, the autothermal reactor part may have an increased energy efficiency relative to prior art autothermal reactors due to pre-heated first product stream. Further, the recycling of the (calorific) waste gases may also be environmentally advantageous. The introduction of O₂ into the autothermal reactor part may result in spontaneous exothermic oxidation of H₂ (and/or NH₃) if the temperature is sufficiently high, such as at a temperature of at least about 550 - 600 °C. Further, the ammonia dissociation catalyst in the allothermal reactor part may serve a double function as dihydrogen and/or ammonia oxidation catalyst, further catalyzing the exothermic oxidation of dihydrogen and/or ammonia.

In particular, as the ammonia is already partially converted in the allothermal reactor part at high temperature, the stream entering the autothermal reactor part may already be at elevated temperature, and the autothermal reactor part may be operated with relatively less heating than is conventional for autothermal reactors as less ammonia may still need to be converted, which may further reduce the consumption of ammonia and/or dihydrogen for operating the system.

In specific embodiments, the invention may provide a system to provide dihydrogen from ammonia, the system comprising an ammonia supply, a heating system, an allothermal reactor part, an autothermal reactor part, and a dioxygen supply, wherein: the ammonia supply is configured to provide an ammonia stream to the allothermal reactor part; the allothermal reactor part comprises a housing and a reactor tube arranged inside of the housing, wherein the reactor tube comprises a first catalytic bed, wherein the first catalytic bed comprises a first ammonia dissociation catalyst, and wherein the allothermal reactor part is configured to provide a first product stream to the autothermal reactor part; the heating system is arranged inside of the housing external to the reactor tube, and wherein the heating system is configured to heat the reactor tube to a temperature selected from the range of 600-1000 °C; the dioxygen supply is configured to provide a dioxygen stream to the autothermal reactor part; and the autothermal reactor part comprises a second catalytic bed, wherein the second catalytic bed comprises a second ammonia dissociation catalyst.

In embodiments, the system may (be configured to) provide dihydrogen from the decomposition of ammonia. In addition, the system may (be configured to) provide other products such as dinitrogen, NOx-compounds and heated steam. In embodiments, these other products may be recycled and reused by the system. A number of these products may also find other uses in industry, i.e., they may be suitably separated and be provided as separate product streams.

In embodiments, the system may comprise one or more of an ammonia supply, a heating system, an allothermal reactor part, an autothermal reactor part, and a dioxygen supply. Especially, in embodiments, the system may comprise the ammonia supply, the heating system, the allothermal reactor part, the autothermal reactor part, and the dioxygen supply.

Hence, in embodiments, the system may comprise the ammonia supply. The ammonia supply may especially be configured to provide an ammonia stream. In particular, the ammonia supply may be configured to provide an ammonia stream to the allothermal reactor part, especially to an inlet of the allothermal reactor part, i.e., the ammonia stream may be directed to the allothermal reactor part. Hence, the allothermal reactor part may comprise an inlet configured to receive the ammonia stream from the ammonia supply.

In further embodiments, the ammonia supply may comprise a pressurized vessel to store ammonia. In embodiments, the ammonia may be stored at saturated conditions in the pressurized vessel. In further embodiments, ammonia may be stored at atmospheric pressure at low temperature, such as -33°C or lower.

In embodiments, the ammonia supply may be configured to bring the ammonia stream in thermal contact with a preheating part (of the heating system), such as a preheater, a vaporizer, or a superheater, or a combination thereof, especially thereby providing a (pre-)heated ammonia stream.

In further embodiments, the system may comprise a heat exchanger ("or heat exchange element)". For instance, the heat exchanger may be configured to exchange heat between (i) one or more of the second product stream (see below), heated steam and flue gas (see below) and (ii) one or more of the ammonia stream and the dioxygen stream. Hence, the system, especially the heat exchanger, may be configured to (pre-)heat the ammonia stream, the calorific stream, and/or the dioxygen stream via heat exchange with one or more of the second product stream, heated steam, and the flue gas. Thereby, the amount of subsequent heating in the allothermal/autothermal reactor parts may be reduced, which may further increase the efficiency of the system, especially the recovery rate of dihydrogen. The term "heat exchanger" may also refer to a plurality of heat exchangers.

In embodiments, the ammonia supply may be configured to provide a (heated) ammonia stream to the allothermal reactor part, wherein the (heated) ammonia stream has a temperature in the range of 500 - 1000 °C, such as in the range of 500 - 750 °C, or such as in the range of 600-1000 °C, especially in the range of 800-1000 °C. For instance, in embodiments, the ammonia supply may be configured to provide the ammonia stream to the allothermal reactor part via the heat exchanger.

In embodiments, the system may comprise a heating system. In embodiments, (at least part of) the heating system may be arranged inside of a housing of the allothermal reactor part, and especially external to a reactor tube in the allothermal reactor part. The heating system may especially (be configured to) heat the reactor tube to a temperature selected from the range of 500 - 1000 °C, such as in the range of 600-1000 °C, especially in the range of 800-1000 °C.

In embodiments, the heating system may comprise a furnace, which may be configured to burn a calorific stream. The calorific stream may especially be obtained from the purification of the second product stream (see below). In further embodiments, the calorific stream may (further) comprise combustible gases obtained as a byproduct of the allothermal reactor part or the autothermal reactor part. Further, the calorific stream may comprise hydrocarbon based fuels, or other combustible fuels such as ammonia or dihydrogen. The heat released from the burnt gases in the furnace may be used to heat the reactor tube.

In further embodiments, the heating system may comprise an electric heating element. For instance, in embodiments, the heating system may comprise both a furnace and an electric heating element.

The heating system may especially be (at least partially) arranged in the vicinity of the inlet in order to heat the reactor tube, and the incoming ammonia stream, such as directly where the ammonia stream enters the allothermal reactor part. The heating system may, however, (essentially) heat the reactor tube throughout the allothermal reactor part.

The arrangement of the heating system, especially the furnace, inside of the housing (of the allothermal reactor part), may be beneficial as the housing may reduce thermic losses, and may thus facilitate effectively providing the generated heat to the reactor tube for the dissociation of ammonia to dihydrogen.

In embodiments, the heating system, especially the furnace, may be configured to receive a calorific stream, especially from the purification element, and a second dioxygen stream, such as an air stream, especially from the dioxygen supply. Hence, in embodiments, the dioxygen supply may be configured to provide a second dioxygen stream, such as a second dioxygen stream comprising (ambient) air, to the heating system, especially to the furnace.

The burning of the calorific stream may, besides heat, further result in a hot flue gas, which may be beneficially used in a heat exchanger to (pre-)heat streams in the system, such as the dioxygen stream and/or the ammonia stream. Hence, in embodiments, the furnace may be configured to provide a flue gas stream (comprising flue gas) to the heat exchanger.

In embodiments, the system may comprise an allothermal reactor part. The term "allothermal reactor part" may herein especially refer to a tubular reactor with a catalyst in a reactor tube, with external heating outside of the reactor tube.

The allothermal reactor part may especially comprise a housing and a reactor tube, wherein the reactor tube is arranged inside of the housing. Hence, the housing may define an allothermal reactor space, wherein the reactor tube is arranged inside of the allothermal reactor space. In embodiments, the allothermal reactor space may further comprise (at least part of) the heating system.

Hence, the allothermal reactor part may comprise a reactor tube. The reactor tube may especially be fluidically coupled to an inlet and outlet, especially wherein the inlet is configured to receive an ammonia stream (from the ammonia supply), and especially wherein the outlet is configured to provide a first product stream to the autothermal reactor part. The term "reactor tube" may herein also refer to a plurality of reactor tubes. Hence, in embodiments, the allothermal reactor part may comprise a plurality of reactor tubes.

It will be clear to the person skilled in the art that various materials may be suitable for an allothermal reactor part. For instance, in embodiments, the allothermal reactor part, especially the reactor tube, may comprise a steel alloy.

In embodiments, the allothermal reactor part, especially the reactor tube, may comprise a first catalytic bed. The first catalytic bed may comprise a bed of particles such as granules, pellets, or small spheres which are configured to contact gases in the allothermal reactor part, such as the ammonia stream passing through the allothermal reactor part, especially through the reactor tube. In further embodiments, the first catalytic bed may comprise a first ammonia dissociation catalyst.

The term "catalytic bed" may herein especially refer to a layer of catalyst particles and/or a structured layer of catalyst material, over which the gas will flow. The catalyst particles and/or structured layer of catalyst material may, for instance, be arranged within a reactor tube.

In embodiments, the first catalytic bed (or the second catalytic bed) may comprise a structured catalyst. In further embodiments, the first catalytic bed (or the second catalytic bed) may comprise catalyst pellets.

In embodiments, the allothermal reactor part may be configured to decompose ammonia by passing the ammonia stream (through the reactor tube) over the first ammonia dissociation catalyst.

In embodiments, the allothermal reactor part may be configured to provide the resulting product stream, i.e. a first product stream, to the autothermal reactor part, especially to a second reactor inlet of the autothermal reactor part. The first product stream may especially comprise (unconverted) ammonia, dihydrogen and dinitrogen. The system may further comprise the dioxygen supply. In embodiments, the dioxygen supply may be configured to provide a dioxygen stream to the autothermal reactor part, especially to a second inlet of the autothermal reactor part. In embodiments, the dioxygen supply may be configured to provide a preheated (500-1000 °C) and/or pressurized dioxygen stream above the pressure of the autothermal reactor inlet pressure. For instance, in embodiments, the dioxygen supply may be configured to provide the dioxygen stream to the autothermal reactor part via the heat exchanger and/or via the pressurizer, especially at least via the heat exchanger, or especially at least via the pressurizer. Hence, the dioxygen supply may be configured to provide a preheated dioxygen stream, a pressurized dioxygen stream, or a preheated and pressurized dioxygen stream (to the autothermal reactor part).

In embodiments, the dioxygen supply may be configured to provide a dioxygen stream comprising at least 20 mol.% O₂, such as at least 21 mol.% O₂, especially at least 25 mol.% O₂. In particular, the molar percentage of O₂ in the dioxygen stream may affect the amount of impurities in the second product stream, i.e., the dioxygen stream may introduce impurities into the autothermal reactor part, which impurity introduction may be lower with a higher molar percentage of O₂. Hence, the use of a purer dioxygen stream may result in a higher concentration of dihydrogen, and a lower concentration of byproducts, which may facilitate the purification of dihydrogen from the second product stream.

In further embodiments, the dioxygen supply may be configured to provide a dioxygen stream comprising at most 100 mol.% O₂, such as at most 95 mol.% O₂, especially at most 90 mol.% O₂.

In further embodiments, the dioxygen supply may be configured to provide a dioxygen stream comprising (ambient) air, especially consisting of (ambient) air.

The dioxygen may especially be reduced in the autothermal reactor part (see below) over an oxidation catalyst according to the equation O₂ + 2H₂ -> 2H₂O. In particular, the oxidation of dioxygen to water is an exothermic reaction, and thus releases heat. This heat may stimulate the conversion of ammonia to dihydrogen in the autothermal reactor part. In particular, the system, especially the control system (see below) may be configured to control the temperature in the autothermal reactor part through the dioxygen stream. Hence, the dioxygen supply may be configured to provide an amount of the dioxygen stream, also based on the mol.% of O₂ in the dioxygen stream, to the autothermal reactor part suitable for controlling the temperature in the autothermal reactor part in a predefined temperature range. If too little dioxygen is provided to the autothermal reactor part, the temperature in the reactor may fall and the conversion rate of ammonia to dihydrogen decreases. However, if excessive dioxygen is provided to the autothermal reactor part, dihydrogen may be inadvertently converted to water (vapor), reducing the dihydrogen recovery rate of the system, and the generation of undesired by-products such as NOₓ compounds, may increase.

In embodiments, the system may comprise the autothermal reactor part. The autothermal reactor part may especially comprise (i) a second reactor inlet configured for receiving a first product stream from the allothermal reactor part, and (ii) a second inlet configured for receiving a dioxygen stream from the dioxygen supply. The autothermal reactor part may further comprise a second catalytic bed. In embodiments, the second catalytic bed may comprise a second ammonia dissociation catalyst. In further embodiments, the second catalytic bed may (further) comprise a dihydrogen oxidation catalyst and/or an ammonia oxidation catalyst. In further embodiments, the second catalytic bed may comprise a dihydrogen oxidation catalyst configured to catalyze the reaction 2H₂ + O₂ → 2 H₂O. In further embodiments, the second catalytic bed may comprise an ammonia oxidation catalyst configured to catalyze the reaction 4NH₃ + 3O₂ → 2 N₂ + 6H₂O.

In yet further embodiments, the second catalytic bed may comprise a combination of a second ammonia dissociation catalyst and a dihydrogen oxidation catalyst. In specific embodiments, the same catalyst may be used as the dihydrogen oxidation catalyst and the ammonia dissociation catalyst.

The term "autothermal reactor part" may herein especially refer to a reactor part comprising a catalyst configured to heat the reactor part via (partial) oxidation of a compound in an inlet gas. In particular, in the context of the present invention, the term "autothermal reactor part" may especially refer to a reactor part comprising a dihydrogen or ammonia oxidation catalyst, wherein the reactor part is primarily heated via oxidation of dihydrogen or ammonia.

It will be clear to the person skilled in the art that various materials may be suitable for an autothermal reactor part. For instance, in embodiments, the autothermal reactor part may comprise a steel alloy.

In further embodiments, the autothermal reactor part may comprise one or more of a plug flow reactor part, a radial flow reactor part, and an axial flow reactor part, especially a plug flow reactor part, or especially a radial flow reactor part, or especially an axial flow reactor part. In particular, a plug flow reactor part may be particularly suitable for a system with a relatively low capacity, such as up to 25 metric tonne H₂ per day, whereas radial and axial flow reactor parts may be particularly suitable for a system with a relatively high capacity, such as at least 25 metric tonne H₂ per day .

In embodiments, the first ammonia dissociation catalyst may be selected from the group comprising Ru, Pt, Pd, Ni, Zn, MnO₂, CaO, Fe, Co, W, La₂O₃,and alloys thereof. In embodiments, the second ammonia dissociation catalyst may (also) be selected from the group comprising Ru, Pt, Pd, Ni, Zn, MnO₂, CaO, Fe, Co, W, La₂O₃, and alloys thereof. Hence, in embodiments, the first ammonia dissociation catalyst and the second dissociation catalyst may be (independently) selected from the group comprising Ru, Pt, Pd, Ni, Zn, MnO₂, CaO, Fe, Co, W, La₂O₃, and alloys thereof. Hence, in embodiments, the first ammonia dissociation catalyst and the second ammonia dissociation catalyst may be the same catalyst. In further embodiments, the first ammonia dissociation catalyst and the second ammonia dissociation catalyst may be different catalysts. The first (and second) ammonia dissociation catalyst may also comprise a plurality of catalysts selected from the group comprising Ru, Pt, Pd, Ni, Zn, MnO₂, CaO, Fe, Co, W, La₂O₃, and alloys thereof.

In particular, as indicated above, the (first/second) ammonia dissociation catalyst may also catalyze the oxidation of dihydrogen and/or ammonia.

Hence, in embodiments, the autothermal reactor part may comprise an ammonia oxidation catalyst and/or a dihydrogen oxidation catalyst, especially wherein the ammonia oxidation catalyst and/or the dihydrogen oxidation catalyst are the same catalyst as the second ammonia dissociation catalyst.

In particular, in embodiments, the first ammonia dissociation catalyst may be selected for ammonia dissociation, whereas the second ammonia dissociation catalyst may be selected for ammonia dissociation and dihydrogen/ammonia oxidation. In embodiments, the first ammonia dissociation catalyst may be selected from the group comprising Ru, Ni, Fe, Co, and alloys thereof. In further embodiments, the second ammonia dissociation catalyst may be selected from the group comprising Ru, Ni, Fe, Co, and alloys thereof.

In further embodiments, the autothermal reactor part may comprise a (separate) ammonia oxidation catalyst and/or a (separate) dihydrogen oxidation catalyst, wherein the ammonia oxidation catalyst and/or the dihydrogen oxidation catalyst differ from the second ammonia dissociation catalyst.

In embodiments, the system, especially the ammonia supply, may comprise a pressurizer. In further embodiments, the pressurizer may be configured to pressurize the ammonia stream to a pressure selected from the range of 1 - 100 bar, such as from the range of 10-100 barg. In particular, in embodiments, the pressurizer may be configured to control the pressure of the ammonia stream at a value selected from the range of 10-100 barg, such as in the range of 40 - 80 barg, or such as in the range of 15 - 60 barg, especially in the range of 15-30 barg, or especially in the range of 40-60 barg.

Here, "barg" may refer to a pressure in bar (10⁵ N/m²) in excess of (local) atmospheric pressure. Ammonia may typically be stored in a storage vessel, such as a cylinder or sphere, at the saturated pressure with respect to the ambient temperature. For example, when it is about -5 °C, the pressurized ammonia may be stored at (about) 2.5 barg, while it may be stored at a pressure of (about) 4-23 barg, especially (about) 4-14 barg, when the ambient temperature is higher. Hence, the inlet pressure of the supplied ammonia may fluctuate depending on the ambient temperature, the heat load from the sun and the amount of inert gases in the vessel. In embodiments, the pressurizer may (be configured to) regulate the pressure of the ammonia stream, to provide the (pressurized) ammonia stream to the allothermal reactor part at a (relatively) constant pressure.

The allothermal reactor part and the autothermal reactor part may, in embodiments, be configured to operate at (about) the same pressure.

In embodiments, the system may comprise a purification element (or "purification unit"). The purification element may especially be configured to receive a second product stream from the autothermal reactor part. In embodiments, the purification element may be configured to separate the second product stream to provide at least a purified dihydrogen stream and a remainder/waste stream.

**In** further embodiments, the purification element may be configured to provide a blend fuel stream, such as a blend fuel stream comprising a mixture of dihydrogen and ammonia. Hence, in embodiments, the system, especially the allothermal reactor part and the autothermal reactor part, may be configured for partial cracking of ammonia.

Hence, in embodiments, the autothermal reactor part may be configured to provide a second product stream to the purification element. **In** embodiments, the second product stream may comprise one or more of dihydrogen, dinitrogen (N₂), water vapor, (unconverted) ammonia, and (traces of) other impurities, such as CO₂, NOₓ, and Ar. The impurities and their (relative) amounts may depend on the (quality of) the dioxygen stream supplied to the autothermal reactor

Purification elements for purifying dihydrogen from water vapor and other gases, such as ammonia, may be known in the art. For instance, in embodiments, the purification element may comprise one or more of an absorber, a pressure swing adsorption system, a temperature swing adsorption system, a cryogenic system, and a membrane system. For instance, the absorber, especially an absorption column, may be included to remove residual ammonia, using an absorbent such as water. A pressure swing adsorption may be a method of separating a specific gas from a mixture of gases based on differences in the affinity of the gases for an adsorbent, especially at a (relatively) constant temperature. A membrane system may comprise a membrane that is permeable for part of the gases of the second product stream while being impermeable to a second part of the gases of the second product stream. Cryogenic separation may involve the cooling of gases to separate gases based on differences in their boiling temperatures, typically at constant pressure.

The purification element (or "purification system") may be configured for one or more of (a) purifying dihydrogen from the product second stream, (b) recovering (unconverted) ammonia from the second product stream, and (c) providing a (waste) calorific stream.

Hence, in embodiments, the purification element may be configured to separate dihydrogen from the second product stream, and especially to provide a dihydrogen stream. For instance, in embodiments, the purification element may be configured to provide a dihydrogen stream comprising at least 95 vol.% dihydrogen, such as at least 99 vol.% dihydrogen, especially at least 99.5 vol.% dihydrogen, such as at least 99.9 vol.% dihydrogen, and higher, including 100% dihydrogen.

In further embodiments, the purification element may be configured to separate ammonia from the second product stream, and especially to provide an ammonia recycling stream to one or more of the ammonia supply, the allothermal reactor part or the autothermal reactor part, especially to one or more of the ammonia supply and the allothermal reactor part, such as to the ammonia supply, or such as to the allothermal reactor part. The recycling of the ammonia may be beneficial as the ammonia may be converted to dihydrogen in a further pass through the reactor parts, and may allow recycling of some heat, as the recycled ammonia may have an elevated heat compared to the heat of ammonia in the ammonia supply.

In further embodiments, the purification element may be configured to separate water and ammonia from the second product stream, and especially to provide a condensate (comprising the water and ammonia), especially to the heat exchanger.

As indicated above, the purification element may be configured to provide a calorific stream from the second product stream. In further embodiments, the purification element may be configured to provide the calorific stream to the heating system. The calorific stream may especially comprise one or more of dinitrogen, dihydrogen, water (vapor), and ammonia.

In yet further embodiments, the heating system, especially the furnace, may be configured to heat the reactor tube by burning the calorific stream, especially at a temperature selected from the range of 800-1500°C, especially from the range of 1000-1300°C, such as from the range of 1100-1200°C.

Hence, in embodiments, the second product stream exiting the autothermal reactor part may be purified to separate useful gas species. In embodiments, the calorific stream may comprise (some) unreacted ammonia and other combustible gases. In embodiments, the calorific stream may be directed into the furnace of the heating system. In further embodiments, the heat generated from burning the calorific stream may be used to heat the reactor tube. In embodiments, the heating system may be configured to burn the calorific stream to maintain a temperature in the range of 800-1500°C, specifically in the range of 1100-1200°C, within the heating system, especially within the furnace. In particular, the separation of the calorific stream from the second product stream and the subsequent burning thereof may increase the overall efficiency of the system due to reduced losses of heat and energy.

In particular, the purification element may be configured to successively separate the second product stream into a plurality of streams, such as into the dihydrogen stream, the ammonia recycling stream, a water (vapor) stream, and the calorific stream. It will be clear to the person skilled in the art that the different streams may be split off from the second product stream in different orders. For instance, in embodiments, the purification element may be configured to successively provide the ammonia recycling stream, the calorific stream, and the purified dihydrogen product stream. In particular, the separation of ammonia may be relatively easy, whereas the separation of dinitrogen and dihydrogen may be more complex.

In embodiments, the purification element may further comprise one or more additional elements selected from the group comprising pressurized tanks, heat exchangers, compressors, scrubbers, and evaporation columns.

In embodiments, the system may comprise a control system. The control system may especially be configured to control one or more of the ammonia supply, the heating system, the allothermal reactor part, the autothermal reactor part, and the dioxygen supply.

The term "controlling" and similar terms herein may especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc.. Beyond that, the term "controlling" and similar terms may additionally include monitoring. Hence, the term "controlling" and similar terms may include imposing behavior on an element and also imposing behavior on an element and monitoring the element. The controlling of the element can be done with a control system. The control system and the element may thus at least temporarily, or permanently, functionally be coupled. The element may comprise the control system. In embodiments, the control system and the element may not be physically coupled. Control can be done via wired and/or wireless control. The term "control system" may also refer to a plurality of different control systems, which especially are functionally coupled, and of which e.g. one master control system may be a control system and one or more others may be slave control systems.

In embodiments, the control system may be configured to control the pressurizer. For instance, in such embodiments, the control system may be configured to control the pressure of the ammonia stream in the range of 1-100 barg, especially in the range of 10 - 100 barg, such as in the range of 40 - 80 barg, or such as in the range of 15 - 60 barg, especially in the range of 15-30 barg, or especially in the range of 40-60 barg, by controlling the pressurizer. In further embodiments, the control system may be configured to control the pressure of the dioxygen stream in the range of 1-100 barg, especially in the range of 10 - 100 barg, such as in the range of 40 - 80 barg, or such as in the range of 15 - 60 barg, especially in the range of 15-30 barg, or, especially in the range of 40-60 barg. In yet further embodiments, the pressure control system may be configured to control the pressurizer to control the pressure of the calorific stream.

**In** embodiments, the system, especially the control system, may comprise a temperature control system. **In** further embodiments, the temperature control system may be configured to control a temperature in the autothermal reactor part, especially of the second catalytic bed, in the range of 500 - 1000°C by controlling (the dioxygen stream provided by) the dioxygen supply.

**In** further embodiments, the temperature control system may be configured to control the temperature in the heating system in the range of 800-1500°C by controlling the flow rate of the calorific stream provided to the heating system.

**In** further embodiments, the temperature control system may be configured to control the temperature in the allothermal reactor part by controlling the heating system.

**In** embodiments, the temperature control system may (be configured to) control the heating system. **In** embodiments, the temperature control system may (be configured to) control the supply of calorific stream to the heating system, especially thereby controlling the temperature at which the heating system operates. **In** embodiments, the temperature control system may (be configured to) control the temperature of the reactor tube in the allothermal reactor part in the range of 600-1000°C, especially in the range of 800-1000°C by controlling the heating system.

**In** embodiments, the allothermal reactor part and the autothermal reactor part may be integrated in a single reactor. In further embodiments, the single reactor may comprise a first inlet, a second inlet, and an outlet. In further embodiments, the ammonia supply may be configured to provide the ammonia stream to the first inlet, and the dioxygen supply may be configured to provide the dioxygen stream to the second inlet. In further embodiments, the single reactor may be configured to provide the second product stream from the outlet, especially to the purification element. In further embodiments, along a fluid flow path from the inlet to the outlet, the second inlet may be arranged downstream from the first catalytic bed, and the second catalytic bed may be arranged downstream from the second inlet.

Hence, in embodiments, the system may comprise a single reactor, which may be configured to provide dihydrogen from ammonia. In embodiments, the ammonia supply may (be configured to) provide a (preheated and/or pressurized) ammonia stream to the first inlet of the single reactor. In further embodiments, the dioxygen supply may (be configured to) provide a (preheated and/or pressurized) dioxygen stream to the second inlet. In embodiments, the single reactor may comprise a first catalytic bed arranged downstream of the first inlet along a fluid path from the inlet to the outlet. In further embodiments, the single reactor may comprise a second catalytic bed arranged downstream of the second inlet along the fluid path. In particular, in embodiments, the first catalytic bed and the second catalytic bed may be spatially separated. In embodiments, the partially decomposed ammonia stream may exit the allothermal reactor part and be provided to the autothermal reactor part of the single reactor. The integration of the two reactor parts may provide the advantage of minimizing loss of heat during the transfer of gases between the different reactor parts.

In particular, in embodiments, the second inlet may be configured to provide (or "guide") the dioxygen stream into a reactor tube.

In embodiments, the first catalytic bed and the second catalytic bed may be physically separated, especially by a distance L3, such as a distance L3 selected from the range of 20 cm - 5 m.

In embodiments, the single reactor may have a reactor of length L1 defined by the first inlet and the outlet. In further embodiments the second inlet may be arranged at an inlet distance d_{L} from the first inlet, especially wherein d_{L} may be selected from the range of 0.02*L 1 - 0.7*L1, such as from the range of 0.1 - 0.5*L1, such as from the range of 0.2 - 0.4*L1. In further embodiments, d_{L} ≤ 0.5*L1, such as ≤ 0.45*L1, especially ≤ 0.4*L1. In further embodiments, d_{L} ≤ 0.35*L1, such as ≤ 0.3*L1, especially ≤ 0.25*L1. In further embodiments, d_{L} ≥ 0.05*L1, such as ≥ 0.1*L1, especially ≥ 0.15*L1. In further embodiments, d_{L} ≥ 0.2*L1, such as ≥ 0.25*L1, especially ≥ 0.3*L1. The relative lengths of the allothermal and the autothermal reactor parts may especially be selected in view of heat transfer properties and the relative contributions of the allothermal and autothermal reactor parts to ammonia dissociation.

In embodiments, the system may comprise a first reactor and a second reactor, especially wherein the first reactor and the second reactor are physically separated. In further embodiments, the first reactor may comprise the allothermal reactor part. Similarly, in embodiments, the second reactor may comprise the autothermal reactor part.

Hence, in embodiments, the system may comprise two separate reactors, the first reactor and the second reactor. In embodiments, the first reactor may comprise a first catalytic bed, an inlet for the ammonia stream and an outlet for the first product stream. In further embodiments, the second reactor may comprise a second reactor inlet for the first product stream, a second inlet configured for receiving a dioxygen stream, an outlet for the second product stream, and the second catalytic bed.

In a second aspect, the invention may provide a method to provide dihydrogen from ammonia, especially using an allothermal reactor part and an autothermal reactor part, such as using the system of the invention. The allothermal reactor may comprise a housing and a reactor tube arranged inside of the housing. In embodiments, the reactor tube may comprise a first catalytic bed, especially wherein the first catalytic bed comprises a first ammonia dissociation catalyst. In further embodiments, the autothermal reactor part may comprise a second catalytic bed comprising a second ammonia dissociation catalyst. The method may especially comprise providing an ammonia stream to the allothermal reactor part, especially to the reactor tube. The method may further comprise heating the reactor tube to a temperature selected from the range of 600-1000 °C. In embodiments, the method may comprise providing a first product stream from the allothermal reactor part to an autothermal reactor part. In further embodiments, the method may comprise providing a dioxygen stream to the autothermal reactor part.

The method may especially be executed using the system of the invention.

In embodiments, the ammonia may be decomposed partially in the allothermal reactor part. A higher temperature ammonia stream may promote the conversion of ammonia into dihydrogen and dinitrogen. In particular, the conversion rate of ammonia into dihydrogen and dinitrogen may increase at higher temperature, while the reaction equilibrium may shift towards H₂ and N₂, The reaction temperature in the allothermal reactor part may especially be selected in view of kinetic reasons, such as catalyst activity. Hence, in embodiments, the ammonia stream may be heated and provided to the allothermal reactor part at a temperature in the range 600-1000 °C, especially in the range 800-1000 °C. In embodiments, the first product stream may comprise the mixture of ammonia, dinitrogen, dihydrogen and trace amount of impurities.

In embodiments, the method may comprise providing the dioxygen stream to provide a molar ratio of ammonia to dioxygen in the autothermal reactor part, especially wherein the molar ratio is selected from the range of 3:1 - 50:1, such as from the range of 4:1 - 30:1, especially from the range of 5:1 - 20:1 (NH₃:O₂), such as from the range of 8:1 - 20:1, especially from the range of 10:1 - 20:1. Hence, in embodiments, the method may comprise providing a molar ratio of NH₃ to O₂ in the autothermal reactor part of at least 3:1, such as at least 4:1, especially at least 5:1. In further embodiments the method may comprise providing a molar ratio of NH₃ to O₂ in the autothermal reactor part of at least 8:1, such as at least 10:1, especially at least 15:1. In further embodiments, the method may comprise providing a molar ratio of NH₃ to O₂ in the autothermal reactor part of at most 50:1, such as at most 30:1, especially at most 20:1.

In embodiments, air rich in dioxygen may be provided to the autothermal reactor part. In further embodiments, pure dioxygen may be provided to the autothermal reactor part. In embodiments, the temperature within the autothermal reactor part may be controlled by controlling the molar ratio of ammonia to dioxygen. Only enough dioxygen to generate sufficient heat to dissociate ammonia may be provided, since excess dioxygen may be disadvantageous (see above).

In embodiments, the method may comprise pressurizing the ammonia stream to a pressure selected from the range of 1 - 100 barg, such as from the range of 40 - 60 barg.

Providing the ammonia at high pressure may facilitate providing the dihydrogen at a high pressure, which may be advantageous as it may reduce the energy required to pressurize the dihydrogen for providing to a distribution network or for storage in high pressure tanks.

In embodiments, the method may comprise providing a second product stream from the autothermal reactor part. In further embodiments, the method may comprise separating the second product stream to provide at least a purified dihydrogen stream and a remainder/waste stream.

In embodiments, the second product stream may comprise ammonia, dihydrogen, dinitrogen, dioxygen and trace impurities. Purification of the second product stream may yield useful products such as dinitrogen, dioxygen, ammonia and dihydrogen. In embodiments, the second product stream may be purified in stages. In further embodiments, dihydrogen and dinitrogen may be purified and separated from the second product stream by means of one or more of a membrane system, a pressure swing absorption system, a temperature swing absorption system, and a cryogenic separation system. In embodiments, ammonia may be recycled from the second product stream by means of one or more of a membrane system, a pressure swing absorption system, a temperature swing absorption system, and a distillation column. In further embodiments, the remainder products may be separated into a calorific stream and a waste stream.

In embodiments, the dihydrogen may be produced at elevated pressure (see above), which may alleviate the need for a (bulky and expensive) compressor skid to bring the dihydrogen product to elevated pressures typically required for distribution networks, end-users, and downstream processes.

In embodiments, the method may comprise separating the second product stream, which may further comprise providing an ammonia recycling stream. In embodiments, the method may comprise providing the ammonia recycling stream to one or more of the ammonia supply and the allothermal reactor part.

In embodiments, the recycled ammonia may be reused as a part of the ammonia stream. In embodiments, the method may comprise heating the recycling ammonia stream, such as with the heating system, or such as with a heat exchanger. In further embodiments, the method may comprise pressurizing the recycling ammonia stream, such as with the pressurizer. In further embodiments, the recycling ammonia stream may be provided directly to the allothermal reactor part.

In embodiments, the separating of the second product stream may comprise providing a calorific stream. In embodiments, the method may further comprise heating the reactor tube by burning the calorific stream, especially at a temperature of 800-1500°C.

In embodiments, the calorific stream may comprise combustible gases. In embodiments, the calorific stream may be burnt to provide heat. In further embodiments, this heat may be used to heat the reactor tube.

In embodiments, the method may comprise controlling a temperature in the autothermal reactor part in the range of 500-800°C, especially 650-800°C by controlling the provision of the dioxygen stream.

In embodiments, the control system may be configured to (have the system) execute the method of the invention. In embodiments, the method comprises using the system of the invention to provide dihydrogen from ammonia.

In particular, the system, especially the control system, may have an operational mode. The term "operational mode" may also be indicated as "controlling mode". The system, or apparatus, or device (see further also below) may execute an action in a "mode" or "operational mode" or "mode of operation". Likewise, in a method an action, stage, or step may be executed in a "mode" or "operation mode" or "mode of operation". This does not exclude that the system, or apparatus, or device may also be adapted for providing another operational mode, or a plurality of other operational modes. Likewise, this does not exclude that before executing the mode and/or after executing the mode one or more other modes may be executed. However, in embodiments a control system (see further also below) may be available, that is adapted to provide at least the operational mode. Would other modes be available, the choice of such modes may especially be executed via a user interface, though other options, like executing a mode in dependence of a sensor signal or a (time) scheme, may also be possible. The operational mode may in embodiments also refer to a system, or apparatus, or device, that can only operate in a single operation mode (i.e. "on", without further tunability).

In embodiments, the operational mode may comprise executing the method of the invention.

The embodiments described herein are not limited to a single aspect of the invention. For example, an embodiment describing the method may, for example, further relate to the system, especially to an operational mode of the system, or especially to the control system. Similarly, an embodiment of the system describing an operation of the system may further relate to embodiments of the method. In particular, an embodiment of the method describing an operation (of the system) may indicate that the system may, in embodiments, be configured for and/or be suitable for the operation. Similarly, an embodiment of the system describing actions of (a stage in) an operational mode may indicate that the method may, in embodiments, comprise those actions.

The terms "upstream" and "downstream" relate to an arrangement of items or features relative to the propagation of a flow path (here especially the gas flow path) from the inlet, wherein relative to a first position within the flow path from the inlet, a second position in the flow path closer to the inlet (along the flow path) is "upstream", and a third position within the flow path further away from the inlet is "downstream".

### BRIEF DESCRIPTION OF THE DRAWINGS

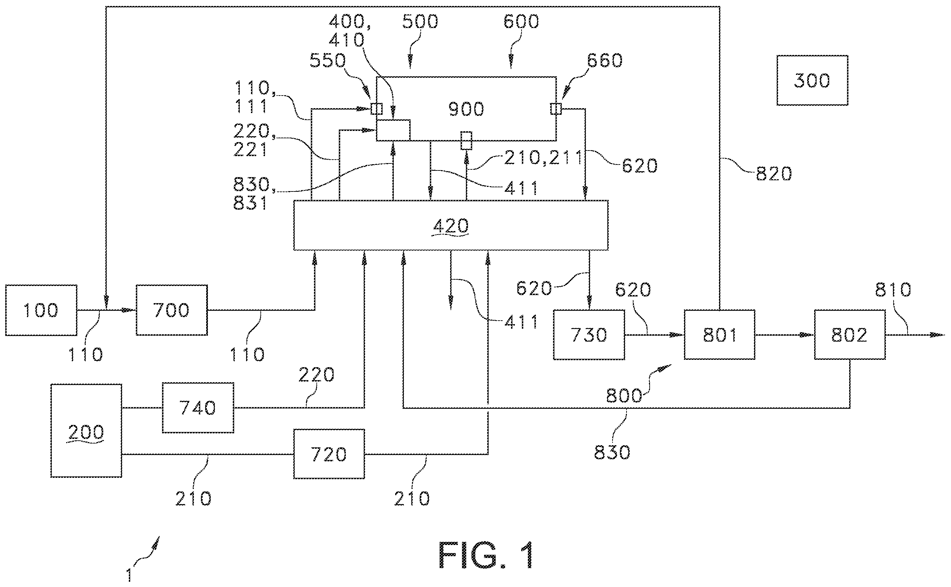

Embodiments of the invention will now be described, by way of example only, with reference to the accompanying schematic drawings in which corresponding reference symbols indicate corresponding parts, and in which: Fig. 1-2 depicts embodiments of the system. The schematic drawings are not necessarily on scale.

### DETAILED DESCRIPTION OF THE EMBODIMENTS

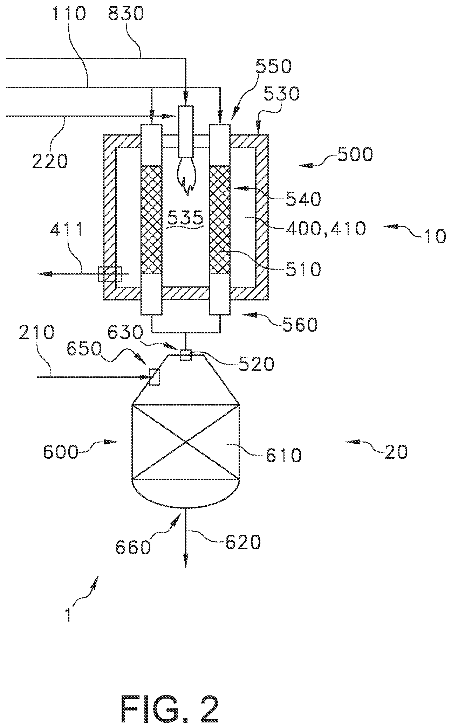

Fig. 1 and 2 schematically depict embodiments of the system 1 to provide dihydrogen from ammonia. The system 1 may comprise an ammonia supply 100, a heating system 400, an allothermal reactor part 500, an autothermal reactor part 600, and a dioxygen supply 200. In embodiments, the ammonia supply 100 may be configured to provide an ammonia stream 110 to the allothermal reactor part 500, especially to a reactor tube 540 (see Fig. 2). The reactor tube 540 may especially be arranged in a housing 530 of the allothermal reactor part 500. In embodiments, the heating system 400, especially a furnace 410, may be arranged inside of the housing 530 and external of the reactor tube 540. The heating system 400 may be arranged to heat the reactor tube 540 throughout the autothermal reactor part 500. In particular, the heating system 400 may be arranged to heat the reactor tube 540 in the vicinity of the first inlet 550. Further, the heating system 400 may be configured to heat the reactor tube 540 to a temperature selected from the range of 600-1000°C, such as from the range of 700-1000 °C, especially from the range of 800-1000 °C.

The housing 530 may thus especially define an allothermal reactor space 535, wherein the reactor tube 540 and the heating system 400 are arranged inside of the allothermal reactor space 535.

In particular, in the depicted embodiment, the ammonia supply 100 may be configured to provide the ammonia stream 110 to the allothermal reactor part 500 via a pressurizer 700, and a heat exchanger 420.

Hence, the system 1 may comprise a pressurizer 700. In further embodiments, the pressurizer 700 may be configured to pressurize the ammonia stream 110 to a pressure selected from the range of 1-100 barg, such as from the range of 10-100 barg, especially in the range of 40-80 barg, or especially in the range of 40-60 barg, or especially in the range of 15-30 barg. In embodiments, the pressurizer 700 may be configured to pressurize the ammonia stream 110 to a pressure of at least 0.1 barg, especially at least 0.2 barg. Furthermore, in embodiments, the pressurizer 700 may be configured to pressurize the ammonia stream 110 to a pressure of at maximum 500 barg, especially at maximum 300 barg, more especially at maximum 200 barg.

The heat exchanger 420 may especially be configured to (pre-)heat one or more of the ammonia stream 110, the dioxygen stream 210, a second dioxygen stream 220, and a calorific stream 830 via heat exchange with a one or more of a second product stream 620 and a flue gas 411 from the heating system 400, especially from the furnace 410.

Hence, in embodiments, the system 1, especially the ammonia supply 100, may be configured to provide a preheated ammonia stream 111 to the allothermal reactor part 500. Especially, the preheated ammonia stream 111 may upon reaching the first inlet 550 of the allothermal reactor part 500 have a temperature selected from the range of 500 - 750 °C.

In embodiments, the allothermal reactor part 500, especially the reactor tube 540, may comprise a first catalytic bed 510. The first catalytic bed 510 may further comprise a first ammonia dissociation catalyst. In particular, the ammonia stream may be provided to the allothermal reactor part 500 and be passed through the reactor tube 540, such that the ammonia is partially decomposed (or "dissociated") to dinitrogen and dihydrogen over the first ammonia dissociation catalyst, such as Ni.

In embodiments, the allothermal reactor part 500 may be configured to provide a first product stream 520 to the autothermal reactor part 600, especially to provide the first product stream 520 from a first outlet 560 of the allothermal reactor part 500 to a second main inlet 630 of the autothermal reactor part 600. The first product stream 520 may especially comprise (unconverted) ammonia, along with dihydrogen, dinitrogen and trace impurities. In further embodiments, the first product stream may be provided to the autothermal reactor part 600 at a temperature in the range of 450-700 °C, especially in the range of 450-600 °C.

In further embodiments, the dioxygen supply 200 may be configured to provide a dioxygen stream 210 to the autothermal reactor part 600, especially via the heat exchanger 420, thereby providing a (pre-)heated dioxygen stream 211 to the autothermal reactor part 600.

In particular, in the depicted embodiment, the system 1 further comprises a second pressurizer 720 (or "compressor") configured to pressurize the dioxygen stream 210 to a desired pressure, such as to a pressure selected from the range of 1 - 100 barg, such as from the range of 10 - 100 barg, especially from the range of 25 - 100 barg. In further embodiments, the second pressurizer 720 may be configured to pressurize the dioxygen stream 210 to a pressure selected from the range of 10 - 60 barg, such as 15 - 30 barg, or such as 40-60 barg. Furthermore, in embodiments, the second pressurizer 720 may be configured to pressurize the dioxygen stream 210 to a pressure of at maximum 500 barg, especially at maximum 300 barg, more especially at maximum 200 barg. Hence, the dioxygen supply 200 may be configured to provide the dioxygen stream 210 to the autothermal reactor part 600 via one or more of the second pressurizer 720 and the heat exchanger 420.

In embodiments, the autothermal reactor part 600 may comprise a second catalytic bed 610. In further embodiments, the second catalytic bed 610 may comprise a second ammonia dissociation catalyst.

In the depicted embodiment, the dioxygen supply 200 is further configured to provide a second dioxygen stream 220 to the heating system 400, especially to the furnace 410. In particular, in the depicted embodiment, the dioxygen supply 200 is configured to provide a second dioxygen stream 220 to the heating system 400 via a fourth pressurizer 740, wherein the fourth pressurizer 740 is configured to pressurize the second dioxygen stream 220 to a pressure suitable for the furnace heating system 400, especially for the furnace 410.

In embodiments, the system 1 may comprise a purification element 800. In embodiments, the autothermal reactor part 600 may be configured to provide a second product stream 620 to the purification element 800, wherein the purification element 800 is configured to separate the second product stream 620, especially to provide at least a dihydrogen stream 810.

In particular, in the depicted embodiment, the system 1 comprises a third pressurizer 730 configured to pressurize the second product stream 620. In particular, in the depicted embodiment, the third pressurizer 730 is arranged upstream from the purification element 800. However, in embodiments, the third pressurizer 730 may also be integrated in the purification element 800, or, for instance, be arranged downstream of a first purification element 801 but upstream of a second purification element 802. In particular, the third pressurizer may beneficially be arranged prior to the separation of N₂ and H₂, as the presence of N₂ (and NH₃, H₂O) may facilitate the pressurization of the H₂ due to their higher molecular weight. Furthermore, pressurization of the second product stream 620 prior to NH₃ separation may facilitate NH₃ separation due to a higher partial pressure of NH₃. In further embodiments, the third pressurizer 730 may be arranged downstream of the second purification element 802.

Hence, in embodiments, the third pressurizer 730 may be arranged between the autothermal reactor part 600 and a first purification unit 801, such as between the heat exchanger and the first purification element 801, with respect to a flow path of the second product stream 620, wherein the first purification unit 801 is configured to separate the NH₃ from the second product stream 620.

The third pressurizer 730 may facilitate obtaining a higher pressure dihydrogen stream 810 after gas separation by the purification element 800. The higher pressure dihydrogen stream 810 may facilitate the integration with downstream processes, which may typically require (or be designed for) a high pressure dihydrogen feed. The third compressor 730 may especially be useful for a system 1, especially the allothermal reactor part 500 and the autothermal reactor part 600, operated at a pressure below 15 bar, as downstream processes may often be designed for a dihydrogen stream at a pressure of 15 bar or higher.

In particular, in embodiments, the purification element 800 may be configured to provide an ammonia recycling stream 820 from the second product stream 620. Further, the purification element 800 may be configured to provide the ammonia recycling stream 820 to one or more of the ammonia supply 100 and the allothermal reactor part 500. In the depicted embodiment, the purification element 800, especially a first purification unit 801 of the purification element 800, is configured to provide the ammonia recycling stream 820 to the allothermal reactor part (via the pressurizer 700 and the heat exchanger 420).

In particular, the first purification unit 801 (or "ammonia recovery system") may comprise a scrubber to remove unreacted ammonia from the second product stream 620. The aqueous ammonia that may be produced during stripping with water, may be directed to a distillation column (of the first purification unit 801). The remaining thermal energy from the second product stream 620 may, for instance, be used for steam generation of a reboiler. The condensed ammonia from the distillation column may be recycled and merged with the ammonia stream 110 to the allothermal reactor part 500, such as of the single reactor 900. The washed gas from the top of the scrubber may be further purified in a second purification unit 802 (or "N₂ removal unit"), such as a PSA, to a desired (or "required") hydrogen purity.

In further embodiments, the purification element 800, especially a second purification unit 802 of the purification element 800, may be configured to provide a calorific stream 830 from the second product stream 620, wherein the purification element 800 is configured to provide the calorific stream 830 to the heating system 400, especially wherein the heating system 400 comprises a furnace 410 configured to heat the ammonia stream 110 by burning the calorific stream 830. The heating system 400, especially the furnace 410, may especially be configured to provide a flue gas 411, resulting from the burning of the calorific stream 830, to the heat exchanger 420.

Hence, in the depicted embodiment, the autothermal reactor part 600 may be configured to provide the second product stream consecutively to the third pressurizer 730, the first purification element 801 and the second purification element 802.

In further embodiments, the autothermal reactor part 600 may be configured to provide the second product stream 620 directly to the purification element 800, i.e., without a third pressurizer 730 or a first purification element 801 arranged between the autothermal reactor part 600 and the purification element 800. Similarly, in embodiments, the autothermal reactor part 600 may be configured to provide the second product stream 620 directly to the second purification element 802 (without flowing the second product stream 620 via a third pressurizer 730 and a first purification element 801), especially without a third pressurizer 730 and without a first purification element 801 arranged between the autothermal reactor part 600 and the second purification element 802. In some embodiments, the second product stream 620 may comprise (only) trace amounts of ammonia. Hence, in such embodiments, the second product stream 620 may be (directly) provided to the second purification element 802, without flowing the second product stream 620 via the first purification element 801.

Furthermore, in embodiments, the system 1 may be configured to be operated under high pressure. Hence, in embodiments, a high pressure second product stream 620 may be provided at the outlet to the autothermal reactor part 600. Such embodiments may provide the benefit of not requiring additional pressurizers (such as the third pressurizer 730). Hence, in embodiments, the autothermal reactor part 600 may be configured to provide the second product stream 620 directly to the second purification element 802 (without flowing the second product stream 620 via a third pressurizer 730). Similarly, in embodiments, if a downstream apparatus is compatible with a mixture of N₂ and H₂, the second product stream 620 may be provided to such downstream apparatus without H₂ purification. For instance, in embodiments, the autothermal reactor part 600 may be configured to provide the second product stream 620 to a downstream apparatus via the third compressor, or directly to the downstream apparatus. Hence, in embodiments, the system 1, especially the autothermal reactor part 600, may be configured to provide the second product stream 620 to a downstream apparatus.

The system may especially further comprise a control system 300. The control system 300 may be configured to control one or more of the ammonia supply 100, the dioxygen supply 200, the heating system 400, the pressurizer 700, the second pressurizer 720, and the third pressurizer 730. In particular, the control system 300 may comprise a temperature control system configured to control one or more temperatures in the system 1, especially by controlling the heating system 400 and/or the dioxygen supply 200.

For instance, in embodiments, the control system 300, especially the temperature control system, may be configured to control a temperature in the autothermal reactor part 600 in the range of 500 - 1000°C by controlling the dioxygen supply 200.

Specifically, in the embodiment depicted in Fig. 2, the dioxygen stream 210 may be provided to the second catalytic bed 610, which may comprise a dihydrogen and/or ammonia oxidation catalyst. The oxidation of dihydrogen and/or ammonia to water (and N₂ for NH₃) may release heat that may help maintain the temperature within the autothermal reactor part 600 and the second catalytic bed 610. In particular, dioxygen may be supplied to the autothermal reactor part 600 in order to heat the autothermal reactor part, especially the second catalytic bed 610, and to thereby drive the conversion of ammonia to H₂ and N₂. The dioxygen stream 210 may especially be provided in an amount suitable to provide a molar ratio of ammonia to dioxygen (in the autothermal reactor part) in the range of 5:1 to 20:1. The temperature of the second product stream 620 exiting the autothermal reactor part 600 may (partially) be dependent on the molar ammonia to dioxygen ratio provided.

The autothermal reactor part may provide a second product stream 620, especially to the purification element 800. The second product stream 620 may comprise reaction products from the autothermal reactor part 600, which may include unreacted ammonia, dihydrogen, dinitrogen, water and trace impurities.

The system 1 may further comprise a dioxygen supply 200, which may be configured to provide a dioxygen stream 210 to the single reactor 900, especially to the autothermal reactor part 600. In embodiments, the dioxygen stream 210 may be preheated to a temperature in the range of 150-450°C and/or be pressurized. The (catalytic) oxidation of dihydrogen and/or ammonia in the autothermal reactor part 600 of the single reactor 900 may generate heat to drive the conversion of ammonia to H₂ and N₂ in the autothermal reactor part, especially in the second catalytic bed 610 of the single reactor 900.

The single reactor 900, especially the autothermal reactor part 600, may be configured to provide a second product stream 620, especially to the purification element 800. The second product stream 620 may comprise one or more of dihydrogen, dinitrogen, (unreacted) ammonia, water (vapor) and (trace) impurities. The second product stream 620 exiting the single reactor 900 may be directed to a purification element 800. The purification element 800 may be configured to separate dihydrogen, dinitrogen, ammonia and water into respective streams of purified dihydrogen (or a "dihydrogen stream"), purified dinitrogen (or a "dinitrogen stream"), purified ammonia (or an "ammonia recycling stream"), purified water (or a "water stream"), or mixtures thereof, such as calorific gases (or a "calorific stream") and waste fluid streams (or a "waste stream") (see above). The calorific stream may especially comprise a mixture of (at least) H₂, N₂ and H₂O. In embodiments, the calorific stream may further comprise (some) NH₃. In particular, in the depicted embodiment, the purification element 800 may be configured to separate the second product stream 620 into an ammonia recycling stream 820, a calorific stream 830 and a dihydrogen stream 810.

In particular, in the depicted embodiment, the purification element 800 comprises a first purification unit 801 and a second purification unit 802. The first purification unit 801 may be configured to ammonia from the second product stream 620, and to provide the ammonia (back) to the allothermal reactor part 500, and especially to provide the remainder of the second product stream 620 to the second purification unit 802. The second purification unit 802 may be configured to separate N₂ from the remainder of the second product stream 620 to provide a calorific stream 830 to the heating system 400, especially to the furnace 410, and to provide a dihydrogen stream 810. For instance, the purification element 800 may comprise one or more of a pressure swing absorption system, a temperature swing absorption system, a membrane system, a cryogenic system, an ammonia scrubber, and a distillation column to facilitate the separation of the gaseous streams.

In the depicted embodiment, the system 1 comprises a first reactor 10 and a second reactor 20, wherein the first reactor 10 comprises the allothermal reactor part 500, and wherein the second reactor 20 comprises the autothermal reactor part 600.

Table 1 indicates experimental measurements from the operation of the system 1, wherein the ammonia supply 100 was configured to provide the (pure) ammonia stream 110 to the allothermal reactor part 500. In particular, the system 1 was operated at 70 barg, that is, the ammonia stream 110 was provided to the inlet of the allothermal reactor part 600 at 70 barg. Under these operating conditions 98.6 vol.% of the ammonia was converted.

| | | |
|---|---|---|
| Operating pressure | | 70 barg |
| Average catalyst temperature | | 700 °C |
| NH₃ conversion | | ≥ 96 **vol.%** |
| H₂ yield | | ≥ 96 **mol.%** |

Table 2 indicates experimental measurements from the operation of the system 1, wherein a combination of ammonia and air was provided to the autothermal reactor part 600 (at a predetermined ratio). Under these operating conditions the dihydrogen yield was at least 80%. Further, under these conditions, trace amounts of NO and no NO₂ were detected.

| | | |
|---|---|---|
| NH₃:O₂ molar ratio | | 6.7 |
| Operating pressure | | 70 barg |
| Average catalyst temperature | | 700 °C |
| NO yield | | <0.2 ppmv |
| NO₂ yield | | 0 ppmv |
| H₂ yield | | 79.2 vol.% |

Hence, the system of the invention may facilitate converting ammonia with low to no NOₓ yield. Further, the experimental results may demonstrate that the H₂ yield may be tuned using O₂.

Fig. 2 schematically depicts an embodiment of the system 1 where the allothermal reactor part 500 and the autothermal reactor part 600 are integrated into a single reactor 900. In particular, for visualization purposes only, Fig. 2 schematically depicts the reactor parts and the associated streams. In the depicted embodiment, the system 1 comprises an ammonia supply 100 (not depicted for visualization purposes), which may provide an ammonia stream 110. The ammonia stream may be compressed to a pressure in the range 1-100 barg and may be preheated to a temperature of 500-750 °C. This ammonia stream may be directed to the first inlet 550 of the single reactor 900. In the depicted embodiment, the single reactor 900 comprises an allothermal reactor part 500 comprising a plurality of reactor tubes 540 configured to be heated by a heating system 400, especially by a furnace 410. Note that, in embodiments, in a single reactor 900, the close proximity of the allothermal reactor part 500 to the autothermal reactor part 600 may provide the benefit that the heat from the autothermal reactor part 600 may especially heat the allothermal reactor part 500. Especially, at least a part of the catalytic bed (510) in the reactor tube(s) 540 of the allothermal part 500 of the single reactor 900 may (also) be heated by the autothermal reactor part 600. The ammonia may be partially decomposed over the first catalytic bed 510 in the reactor tubes 540 of the allothermal reactor part 500 of the single reactor 900. The reaction products may form the first product stream 520 which may comprise ammonia, dihydrogen, dinitrogen and trace impurities. The first product stream 520 may be provided to the autothermal reactor part 600 of the single reactor 900 for further conversion. The first product stream 520 may especially have a temperature selected from the range of 450 - 600 °C.

In the depicted embodiment, the dioxygen stream 210 is added to the autothermal reactor part separately from the first product stream 520. In further embodiments, the dioxygen stream 210 and the first product stream 520 may be combined between the allothermal reactor part 500 and the autothermal reactor part 600.

Fig. 1-2 further schematically depict embodiments of the method for providing dihydrogen from ammonia using the allothermal reactor part 500 and the autothermal reactor part 600. In the depicted embodiments, the method comprises: providing an ammonia stream 110 to the allothermal reactor part 500, especially to the reactor tube 540, and heating the reactor tube 540 to a temperature selected from the range of 600-1000 °C. The method further comprises providing a first product stream 520 from the allothermal reactor part 500 to the autothermal reactor part 600, and providing a dioxygen stream 210 to the autothermal reactor part 600, especially to heat the autothermal reactor part.

In the depicted embodiments, the method further comprises providing a second product stream 620 from the autothermal reactor part 600, and separating the second product stream 620 to provide one or more of a dihydrogen stream 810, an ammonia recycling stream 820, and a calorific stream 830.

In further embodiments, the method may comprise providing the ammonia recycling stream 820 to one or more of the ammonia supply 100 and the allothermal reactor part 500.

In further embodiments, the method may comprise heating the reactor tube 540 by burning the calorific stream 830.

The term "plurality" refers to two or more. Furthermore, the terms "a plurality of" and "a number of" may be used interchangeably.

The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%. Moreover, the terms "about" and "approximately" may also relate to 90% or higher, such as 95% or higher, especially 99% or higher, even more especially 99.5% or higher, including 100%. For numerical values it is to be understood that the terms "substantially", "essentially", "about", and "approximately" may also relate to the range of 90% - 110%, such as 95%-105%, especially 99%-101% of the values(s) it refers to.

The term "comprise" also includes embodiments wherein the term "comprises" means "consists of'.

The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of" but may in another embodiment also refer to "containing at least the defined species and optionally one or more other species".

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

The devices, apparatus, or systems may herein amongst others be described during operation.

The term "further embodiment" and similar terms may refer to an embodiment comprising the features of the previously discussed embodiment but may also refer to an alternative embodiment.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim.

Use of the verb "to comprise" and its conjugations does not exclude the presence of elements or steps other than those stated in a claim. Unless the context clearly requires otherwise, throughout the description and the claims, the words "comprise", "comprising", "include", "including", "contain", "containing" and the like are to be construed in an inclusive sense as opposed to an exclusive or exhaustive sense; that is to say, in the sense of "including, but not limited to".

The article "a" or "an" preceding an element does not exclude the presence of a plurality of such elements.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage.

The invention also provides a control system that may control the device, apparatus, or system, or that may execute the herein described method or process. Yet further, the invention also provides a computer program product, when running on a computer which is functionally coupled to or comprised by the device, apparatus, or system, controls one or more controllable elements of such device, apparatus, or system.

The invention further applies to a device, apparatus, or system comprising one or more of the characterizing features described in the description and/or shown in the attached drawings. The invention further pertains to a method or process comprising one or more of the characterizing features described in the description and/or shown in the attached drawings. Moreover, if a method or an embodiment of the method is described being executed in a device, apparatus, or system, it will be understood that the device, apparatus, or system is suitable for or configured for (executing) the method or the embodiment of the method, respectively.

The various aspects discussed in this patent can be combined in order to provide additional advantages. Further, the person skilled in the art will understand that embodiments can be combined, and that also more than two embodiments can be combined. Furthermore, some of the features can form the basis for one or more divisional applications.

## Claims

1. A system (1) to provide dihydrogen from ammonia, the system (1) comprising an ammonia supply (100), a purification element (800), a heating system (400), an allothermal reactor part (500), an autothermal reactor part (600), and a dioxygen supply (200), wherein:
- the ammonia supply (100) is configured to provide an ammonia stream (110) to the allothermal reactor part (500);
- the allothermal reactor part (500) comprises a housing (530) and a reactor tube (540) arranged inside of the housing (530), wherein the reactor tube (540) comprises a first catalytic bed (510), wherein the first catalytic bed (510) comprises a first ammonia dissociation catalyst selected from the group comprising Ru, Pt, Pd, Ni, Zn, MnO₂, CaO, Fe, Co, W, La₂O₃, and alloys thereof, and wherein the allothermal reactor part (500) is configured to provide a first product stream (520) to the autothermal reactor part (600);
- the autothermal reactor part (600) is configured to provide a second product stream (620) to the purification element (800), wherein the purification element (800) is configured to provide a calorific stream (830) from the second product stream (620), wherein the purification element (800) is configured to provide the calorific stream (830) to the heating system (400);
- the heating system (400) is arranged inside of the housing (530) and external to the reactor tube (540), wherein the heating system (400) is configured to heat the reactor tube (540) to a temperature selected from the range of 600-1000 °C, wherein the heating system (400) is configured to heat the reactor tube (540) by burning the calorific stream (830);
- the dioxygen supply (200) is configured to provide a dioxygen stream (210) to the autothermal reactor part (600); and
- the autothermal reactor part (600) comprises a second catalytic bed (610), wherein the second catalytic bed (610) comprises a second ammonia dissociation catalyst selected from the group comprising Ru, Pt, Pd, Ni, Zn, MnO₂, CaO, Fe, Co, W, La₂O₃, and alloys thereof.

2. The system (1) according to any one of the preceding claims, wherein the system (1) comprises a pressurizer (700), wherein the pressurizer (700) is configured to pressurize the ammonia stream (110) to a pressure selected from the range of 10-100 barg.

3. The system (1) according to any one of the preceding claims, wherein the purification element (800) is configured to separate the second product stream (620) to provide at least a dihydrogen stream (810).

4. The system (1) according to any one of the preceding claims, wherein the purification element (800) is configured to provide an ammonia recycling stream (820) from the second product stream (620), wherein the purification element (800) is configured to provide the ammonia recycling stream (820) to one or more of the ammonia supply (100) and the allothermal reactor part (500).

5. The system (1) according to any one of the preceding claims, wherein the heating system (400) comprises a furnace (410), and wherein the furnace (410) is configured to heat the reactor tube (540) by burning the calorific stream (830).

6. The system (1) according to any one of the preceding claims, wherein one or more applies of:
- the first ammonia dissociation catalyst is selected from the group comprising Ru, Ni, Fe, Co, and alloys thereof; and
- the second ammonia dissociation catalyst is selected from the group comprising Ru, Ni, Fe, Co, , and alloys thereof.

7. The system (1) according to any one of the preceding claims, wherein the dioxygen supply (200) is configured to provide a dioxygen stream (210) comprising at least 20 mol.% O₂.

8. The system (1) according to any one of the preceding claims, wherein the system (1) comprises a control system (300), wherein the control system (300) is configured to control a temperature in the autothermal reactor part (600) in the range of 500 - 1000 °C by controlling the dioxygen supply (200).

9. The system (1) according to any one of the preceding claims, wherein the allothermal reactor part (500) and the autothermal reactor part (600) are integrated in a single reactor (900), wherein the single reactor (900) comprises a first inlet (550), a second inlet (650), and an outlet (660), wherein the ammonia supply (100) is configured to provide the ammonia stream (110) to the first inlet (550), and wherein the dioxygen supply (200) is configured to provide the dioxygen stream (210) to the second inlet (650), wherein along a fluid flow path from the inlet to the outlet (660) (i) the second inlet (650) is arranged downstream from the first catalytic bed (510), and (ii) the second catalytic bed (610) is arranged downstream from the second inlet (650).

10. The system (1) according to any one of the preceding claims 1-8, wherein the system (1) comprises a first reactor (10) and a second reactor (20), wherein the first reactor (10) comprises the allothermal reactor part (500), and wherein the second reactor (20) comprises the autothermal reactor part (600).

11. A method to provide dihydrogen from ammonia using an allothermal reactor part (500) and an autothermal reactor part (600), wherein the allothermal reactor part (500) comprises a housing (530) and a reactor tube (540) arranged inside of the housing (530), wherein the reactor tube (540) comprises a first catalytic bed (510), wherein the first catalytic bed (510) comprises a first ammonia dissociation catalyst, and wherein the autothermal reactor part (600) comprises a second catalytic bed (610) comprising a second ammonia dissociation catalyst, the method comprising:
- providing an ammonia stream (110) to the reactor tube (540);
- heating the reactor tube (540) to a temperature selected from the range of 600-1000 °C;
- providing a first product stream (520) from the allothermal reactor part (500) to the autothermal reactor part (600);
- providing a dioxygen stream (210) to the autothermal reactor part (600);
- providing a second product stream (620) from the autothermal reactor part (600); and
- separating the second product stream (620) to provide a calorific stream (830), wherein the method comprises heating the reactor tube (540) by burning the calorific stream (830).

12. The method according to claim 11, wherein the method comprises providing the dioxygen stream (210) to provide a molar ratio of ammonia to dioxygen in the autothermal reactor part (600), wherein the molar ratio is selected from the range of 5:1 - 20:1.

13. The method according to any one of the preceding claims 11-12, wherein the method comprises pressurizing the ammonia stream (110) to a pressure selected from the range of 10-100 barg.

14. The method according to any one of the preceding claims 11-13, wherein the method further comprises:
- separating the second product stream (620) to provide at least a dihydrogen stream.

15. The method according to any one of the preceding claims 11-14, wherein the separating of the second product stream (620) comprises providing an ammonia recycling stream (820), and wherein the method comprises providing the ammonia recycling stream (820) to one or more of the ammonia supply (100) and the allothermal reactor part (500).

16. The method according to any one of the preceding claims 11-15, wherein the method comprises controlling a temperature in the autothermal reactor part (600) in the range of 500 - 1000 °C.

## Patentansprüche

1. System (1) zur Bereitstellung von Diwasserstoff aus Ammoniak, wobei das System (1) eine Ammoniakversorgung (100), ein Reinigungselement (800), ein Heizsystem (400), einen allothermischen Reaktorteil (500), einen autothermischen Reaktorteil (600) und eine Disauerstoffversorgung (200) umfasst, wobei:
- die Ammoniakversorgung (100) dafür gestaltet ist, dem allothermischen Reaktorteil (500) einen Ammoniakstrom (110) bereitzustellen;
- der allothermische Reaktorteil (500) ein Gehäuse (530) und ein Reaktorrohr (540), das in dem Gehäuse (530) angeordnet ist, umfasst, wobei das Reaktorrohr (540) ein erstes Katalysatorbett (510) umfasst, wobei das erste Katalysatorbett (510) einen ersten Ammoniakdissoziationskatalysator ausgewählt aus der Gruppe umfassend Ru, Pt, Pd, Ni, Zn, MnO₂, CaO, Fe, Co, W, La₂O₃ und Legierungen davon umfasst und wobei der allothermische Reaktorteil (500) dafür gestaltet ist, dem autothermischen Reaktorteil (600) einen ersten Produktstrom (520) bereitzustellen;
- der autothermische Reaktorteil (600) dafür gestaltet ist, dem Reinigungselement (800) einen zweiten Produktstrom (620) bereitzustellen, wobei das Reinigungselement (800) dafür gestaltet ist, einen kalorischen Strom (830) aus dem zweiten Produktstrom (620) bereitzustellen, wobei das Reinigungselement (800) dafür gestaltet ist, dem Heizsystem (400) den kalorischen Strom (830) bereitzustellen;
- das Heizsystem (400) innerhalb des Gehäuses (530) und außerhalb des Reaktorrohrs (540) angeordnet ist, wobei das Heizsystem (400) dafür gestaltet ist, das Reaktorrohr (540) auf eine Temperatur ausgewählt aus dem Bereich von 600-1000 °C zu erhitzen, wobei das Heizsystem (400) dafür gestaltet ist, das Reaktorrohr (540) durch Verbrennen des kalorischen Stroms (830) zu erhitzen;
- die Disauerstoffversorgung (200) dafür gestaltet ist, dem autothermischen Reaktorteil (600) einen Disauerstoffstrom (210) bereitzustellen; und
- der autothermische Reaktorteil (600) ein zweites Katalysatorbett (610) umfasst, wobei das zweite Katalysatorbett (610) einen zweiten Ammoniakdissoziationskatalysator ausgewählt aus der Gruppe umfassend Ru, Pt, Pd, Ni, Zn, MnO₂, CaO, Fe, Co, W, La₂O₃ und Legierungen davon umfasst.

2. System (1) nach einem der vorstehenden Ansprüche, wobei das System (1) einen Druckerzeuger (700) umfasst, wobei der Druckerzeuger (700) dafür gestaltet ist, den Ammoniakstrom (110) mit einem Druck ausgewählt aus dem Bereich von 10-100 barg zu beaufschlagen.

3. System (1) nach einem der vorstehenden Ansprüche, wobei das Reinigungselement (800) dafür gestaltet ist, den zweiten Produktstrom (620) zu aufzutrennen, um wenigstens einen Dihydrogenstrom (810) bereitzustellen.

4. System (1) nach einem der vorstehenden Ansprüche, wobei das Reinigungselement (800) dafür gestaltet ist, einen Ammoniakrückführstrom (820) aus dem zweiten Produktstrom (620) bereitzustellen, wobei das Reinigungselement (800) dafür gestaltet ist, den Ammoniakrückführstrom (820) an eines oder mehrere von der Ammoniakversorgung (100) und dem allothermischen Reaktorteil (500) bereitzustellen.

5. System (1) nach einem der vorstehenden Ansprüche, wobei das Heizsystem (400) einen Ofen (410) umfasst und wobei der Ofen (410) dafür gestaltet ist, das Reaktorrohr (540) durch Verbrennen des kalorischen Stroms (830) zu erhitzen.

6. System (1) nach einem der vorstehenden Ansprüche, wobei eines oder mehrere zutreffen von:
- der erste Ammoniakdissoziationskatalysator ist ausgewählt aus der Gruppe umfassend Ru, Ni, Fe, Co und Legierungen davon; und
- der zweite Ammoniakdissoziationskatalysator ist ausgewählt aus der Gruppe bestehend aus Ru, Ni, Fe, Co und Legierungen davon.

7. System (1) nach einem der vorstehenden Ansprüche, wobei die Disauerstoffversorgung (200) dafür gestaltet ist, einen Disauerstoffstrom (210) umfassend wenigstens 20 Mol.-% O₂ bereitzustellen.

8. System (1) nach einem der vorstehenden Ansprüche, wobei das System (1) ein Steuersystem (300) umfasst, wobei das Steuersystem (300) dafür gestaltet ist, eine Temperatur in dem autothermischen Reaktorteil (600) in dem Bereich von 500-1000 °C durch Steuern der Disauerstoffversorgung (200) zu steuern.

9. System (1) nach einem der vorstehenden Ansprüche, wobei der allothermische Reaktorteil (500) und der autothermische Reaktorteil (600) in einem einzigen Reaktor (900) integriert sind, wobei der einzige Reaktor (900) einen ersten Einlass (550), einen zweiten Einlass (650) und einen Auslass (660) umfasst, wobei die Ammoniakversorgung (100) dafür gestaltet ist, den Ammoniakstrom (110) an den ersten Einlass (550) bereitzustellen, und wobei die Disauerstoffversorgung (200) dafür gestaltet ist, den Disauerstoffstrom (210) an den zweiten Einlass (650) bereitzustellen, wobei entlang eines Fluidströmungswegs von dem Einlass zu dem Auslass (660) (i) der zweite Einlass (650) stromabwärts von dem ersten Katalysatorbett (510) angeordnet ist und (ii) das zweite Katalysatorbett (610) stromabwärts von dem zweiten Einlass (650) angeordnet ist.

10. System (1) nach einem der vorstehenden Ansprüche 1-8, wobei das System (1) einen ersten Reaktor (10) und einen zweiten Reaktor (20) umfasst, wobei der erste Reaktor (10) den allothermischen Reaktorteil (500) umfasst und wobei der zweite Reaktor (20) den autothermischen Reaktorteil (600) umfasst.

11. Verfahren zum Bereitstellen von Diwasserstoff aus Ammoniak unter Verwendung eines allothermischen Reaktorteils (500) und eines autothermischen Reaktorteils (600), wobei der allothermische Reaktorteil (500) ein Gehäuse (530) und ein Reaktorrohr (540), das in dem Gehäuse (530) angeordnet ist, umfasst, wobei das Reaktorrohr (540) ein erstes Katalysatorbett (510) umfasst, wobei das erste Katalysatorbett (510) einen ersten Ammoniakdissoziationskatalysator umfasst und wobei der autothermische Reaktorteil (600) ein zweites Katalysatorbett (610) umfasst, das einen zweiten Ammoniakdissoziationskatalysator umfasst, wobei das Verfahren umfasst:
- Bereitstellen eines Ammoniakstroms (110) an das Reaktorrohr (540);
- Erhitzen des Reaktorrohrs (540) auf eine Temperatur ausgewählt aus dem Bereich von 600-1000 °C;
- Bereitstellen eines ersten Produktstroms (520) von dem allothermischen Reaktorteil (500) an den autothermischen Reaktorteil (600);
- Bereitstellen eines Disauerstoffstroms (210) an den autothermischen Reaktorteil (600);
- Bereitstellen eines zweiten Produktstroms (620) aus dem autothermischen Reaktorteil (600); und
- Auftrennen des zweiten Produktstroms (620), um einen kalorischen Strom (830) bereitzustellen, wobei das Verfahren Erhitzen des Reaktorrohrs (540) durch Verbrennen des kalorischen Stroms (830) umfasst.

12. Verfahren nach Anspruch 11, wobei das Verfahren Bereitstellen des Disauerstoffstroms (210) umfasst, um ein Molverhältnis von Ammoniak zu Disauerstoff in dem autothermischen Reaktorteil (600) bereitzustellen, wobei das Molverhältnis aus dem Bereich von 5:1 bis 20:1 ausgewählt ist.

13. Verfahren nach einem der vorstehenden Ansprüche 11-12, wobei das Verfahren Druckbeaufschlagen des Ammoniakstroms (110) auf einen Druck ausgewählt aus dem Bereich von 10-100 barg umfasst.

14. Verfahren nach einem der vorstehenden Ansprüche 11-13, wobei das Verfahren ferner umfasst:
- Auftrennen des zweiten Produktstroms (620), um wenigstens einen Dihydrogenstrom bereitzustellen.

15. Verfahren nach einem der vorstehenden Ansprüche 11-14, wobei das Auftrennen des zweiten Produktstroms (620) Bereitstellen eines Ammoniakrückführstroms (820) umfasst und wobei das Verfahren Bereitstellen des Ammoniakrückführstroms (820) an eines oder mehrere von der Ammoniakversorgung (100) und den allothermischen Reaktorteil (500) umfasst.

16. Verfahren nach einem der vorstehenden Ansprüche 11-15, wobei das Verfahren Steuern einer Temperatur in dem autothermischen Reaktorteil (600) in dem Bereich von 500-1000 °C umfasst.

## Revendications

1. Système (1) servant à obtenir du dihydrogène à partir d'ammoniac, le système (1) comprenant une alimentation en ammoniac (100), un élément de purification (800), un système de chauffage (400), une partie réacteur allothermique (500), une partie réacteur autothermique (600) et une alimentation en dioxygène (200), dans lequel :
- l'alimentation en ammoniac (100) est conçue pour fournir un courant d'ammoniac (110) à la partie réacteur allothermique (500) ;
- la partie réacteur allothermique (500) comprend une enceinte (530) et un tube de réacteur (540) disposé à l'intérieur de l'enceinte (530), le tube de réacteur (540) comprenant un premier lit catalytique (510), le premier lit catalytique (510) comprenant un premier catalyseur de dissociation d'ammoniac choisi dans le groupe comprenant Ru, Pt, Pd, Ni, Zn, MnO₂, CaO, Fe, Co, W, La₂O₃ et les alliages de ceux-ci, et la partie réacteur allothermique (500) étant conçue pour fournir un premier courant de produit (520) à la partie réacteur autothermique (600) ;
- la partie réacteur autothermique (600) est conçue pour fournir un deuxième courant de produit (620) à l'élément de purification (800), l'élément de purification (800) étant conçu pour obtenir un courant calorifique (830) à partir du deuxième courant de produit (620), l'élément de purification (800) étant conçu pour fournir le courant calorifique (830) au système de chauffage (400) ;
- le système de chauffage (400) est disposé à l'intérieur de l'enceinte (530) et à l'extérieur du tube de réacteur (540), le système de chauffage (400) étant conçu pour chauffer le tube de réacteur (540) jusqu'à une température choisie dans la plage de 600 - 1000 °C, le système de chauffage (400) étant conçu pour chauffer le tube de réacteur (540) en brûlant le courant calorifique (830) ;
- l'alimentation en dioxygène (200) est conçue pour fournir un courant de dioxygène (210) à la partie réacteur autothermique (600) ; et
- la partie réacteur autothermique (600) comprend un deuxième lit catalytique (610), le deuxième lit catalytique (610) comprenant un deuxième catalyseur de dissociation d'ammoniac choisi dans le groupe comprenant Ru, Pt, Pd, Ni, Zn, MnO₂, CaO, Fe, Co, W, La₂O₃ et les alliages de ceux-ci.

2. Système (1) selon l'une quelconque des revendications précédentes, le système (1) comprenant un pressuriseur (700), le pressuriseur (700) étant conçu pour pressuriser le courant d'ammoniac (110) jusqu'à une pression choisie dans la plage de 10-100 barg.

3. Système (1) selon l'une quelconque des revendications précédentes, dans lequel l'élément de purification (800) est conçu pour séparer le deuxième courant de produit (620) afin de fournir au moins un courant de dihydrogène (810).

4. Système (1) selon l'une quelconque des revendications précédentes, dans lequel l'élément de purification (800) est conçu pour obtenir un courant de recyclage d'ammoniac (820) à partir du deuxième courant de produit (620), l'élément de purification (800) étant conçu pour fournir le courant de recyclage d'ammoniac (820) à l'alimentation en ammoniac (100) et/ou à la partie réacteur allothermique (500).

5. Système (1) selon l'une quelconque des revendications précédentes, dans lequel le système de chauffage (400) comprend un four (410), et dans lequel le four (410) est conçu pour chauffer le tube de réacteur (540) en brûlant le courant calorifique (830).

6. Système (1) selon l'une quelconque des revendications précédentes, dans lequel une ou plusieurs des situations suivantes s'appliquent :
- le premier catalyseur de dissociation d'ammoniac est choisi dans le groupe comprenant Ru, Ni, Fe, Co et les alliages de ceux-ci ; et
- le deuxième catalyseur de dissociation d'ammoniac est choisi dans le groupe comprenant Ru, Ni, Fe, Co et les alliages de ceux-ci.

7. Système (1) selon l'une quelconque des revendications précédentes, dans lequel l'alimentation de dioxygène (200) est conçue pour fournir un courant de dioxygène (210) comprenant au moins 20 % en moles de O₂.

8. Système (1) selon l'une quelconque des revendications précédentes, le système (1) comprenant un système de régulation (300), le système de régulation (300) étant conçu pour réguler une température dans la partie réacteur autothermique (600) dans la plage de 500 - 1000 °C en régulant l'alimentation en dioxygène (200) .

9. Système (1) selon l'une quelconque des revendications précédentes, dans lequel la partie réacteur allothermique (500) et la partie réacteur autothermique (600) sont intégrées dans un unique réacteur (900), l'unique réacteur (900) comprenant une première entrée (550), une deuxième entrée (650) et une sortie (660), l'alimentation en ammoniac (100) étant conçue pour fournir le courant d'ammoniac (110) à la première entrée (550), et l'alimentation de dioxygène (200) étant conçue pour fournir le courant de dioxygène (210) à la deuxième entrée (650), dans lequel, le long d'une voie d'écoulement de fluide allant de l'entrée à la sortie (660), (i) la deuxième entrée (650) est disposée en aval du premier lit catalytique (510), et (ii) le deuxième lit catalytique (610) est disposé en aval de la deuxième entrée (650).

10. Système (1) selon l'une quelconque des revendications 1 à 8 précédentes, le système (1) comprenant un premier réacteur (10) et un deuxième réacteur (20), le premier réacteur (10) comprenant la partie réacteur allothermique (500), et le deuxième réacteur (20) comprenant la partie réacteur autothermique (600) .

11. Procédé servant à obtenir du dihydrogène à partir d'ammoniac au moyen d'une partie réacteur allothermique (500) et d'une partie réacteur autothermique (600), la partie réacteur allothermique (500) comprenant une enceinte (530) et un tube de réacteur (540) disposé à l'intérieur de l'enceinte (530), le tube de réacteur (540) comprenant un premier lit catalytique (510), le premier lit catalytique (510) comprenant un premier catalyseur de dissociation d'ammoniac, et la partie réacteur autothermique (600) comprenant un deuxième lit catalytique (610) comprenant un deuxième catalyseur de dissociation d'ammoniac, le procédé comprenant :
- la fourniture d'un courant d'ammoniac (110) au tube de réacteur (540) ;
- le chauffage du tube de réacteur (540) jusqu'à une température choisie dans la plage de 600 - 1000 °C ;
- la fourniture d'un premier courant de produit (520) depuis la partie réacteur allothermique (500) à la partie réacteur autothermique (600) ;
- la fourniture d'un courant de dioxygène (210) à la partie réacteur autothermique (600) ;
- la fourniture d'un deuxième courant produit (620) depuis la partie réacteur autothermique (600) ; et
- la séparation du deuxième courant de produit (620) pour obtenir un courant calorifique (830), le procédé comprenant le chauffage du tube de réacteur (540) par combustion du courant calorifique (830).

12. Procédé selon la revendication 11, le procédé comprenant la fourniture du courant de dioxygène (210) pour obtenir un rapport molaire entre ammoniac et dioxygène dans la partie réacteur autothermique (600), le rapport molaire étant choisi dans la plage de 5/1 - 20/1.

13. Procédé selon l'une quelconque des revendications 11 et 12 précédentes, le procédé comprenant la pressurisation du courant d'ammoniac (110) jusqu'à une pression choisie dans la plage de 10-100 barg.

14. Procédé selon l'une quelconque des revendications 11 à 13 précédentes, le procédé comprenant en outre :
- la séparation du deuxième courant de produit (620) pour obtenir au moins un courant de dihydrogène.

15. Procédé selon l'une quelconque des revendications 11 à 14 précédentes, la séparation du deuxième courant de produit (620) comprenant l'obtention d'un courant de recyclage d'ammoniac (820), et le procédé comprenant la fourniture du courant de recyclage d'ammoniac (820) à l'alimentation en ammoniac (100) et/ou à la partie réacteur allothermique (500).

16. Procédé selon l'une quelconque des revendications 11 à 15 précédentes, le procédé comprenant la régulation d'une température dans la partie réacteur autothermique (600) dans la plage de 500 - 1000 °C.
